# EUROPÄISCHE PATENTSCHRIFT

(11) **EP 2 138 052 B1**
(45) Veröffentlichungstag und Bekanntmachung des Hinweises auf die Patenterteilung: **08.08.2012**
(21) Anmeldenummer: 09008258.7
(22) Anmeldetag: 24.06.2009
(51) Int. Cl.: A23L 1/0522, A23L 1/09, A23G 3/42, A23G 3/48, A23C 20/02

(54) **Gelatinierte Süßigkeit, Käseimitat und Herstellungsverfahren**
Gelatinised confectionary, imitation cheese and method for producing same
Confiserie gélatinée, imitation de fromage et procédé de fabrication

(30) Priorität: 26.06.2008 DE 102008030440
(43) Veröffentlichungstag der Anmeldung: 30.12.2009
(60) Teilanmeldung: 12150898.0
(73) Patentinhaber: Emsland-Stärke GmbH, 49824 Emlichheim (DE)
(72) Erfinder: Hermann, Martina, 49824 Emlichheim (DE)
(74) Vertreter: Scholz, Volker

(56) Entgegenhaltungen:
- EP-A- 1 645 196
- WO-A-00/44241
- WO-A-2004/056192
- WO-A-2004/064540
- DE-A1- 19 912 009
- GB-A- 2 426 219
- US-A- 4 874 628
- 'Ullmann's Enzyklopädie', Bd. 22, WILEY Seiten 174 - 177

## Beschreibung

Die vorliegende Erfindung betrifft eine gelatinisierte Süßigkeit, ein Käseimitat sowie ein Herstellungsverfahren derselben

Aus dem Stand der Technik ist beispielsweise eine auf Stärke basierte, gelatinisierte Süßigkeit aus der EP 1645196 B1 bekannt, die eine verflüssigte und stabilisierte Hülsenfrucht-Stärke mit einem Gehalt an Amylose von 25 bis 40% und ein oder mehrere Süßungsmittel enthält.

Bei der Herstellung einer solchen Süßigkeit auf Basis von Stärke kann jedoch noch die Gelierzeit verkürzt und die Verarbeitbarkeit insgesamt verbessert werden.

Aus der WO 00/44241 A1 ist ein gelatinisiertes Konfekt bekannt, das hergestellt wird aus einer Stärkemischung umfassend insbesondere modifizierte Kartoffel- und Tapiokastärke.

Die WO 2004/064540 A1 offenbart ein Käseimitat, das eine enzymatisch verflüssigte Erbsenstärke umfasst.

Aus DE 199 12 009 A1 ist ein Verfahren zur Herstellung von Glasnudeln mit einer Mischung von Mungbohnenstärke und Kartoffelstärke, insbesondere im Verhältnis von 25:75 oder 50:50, bekannt. Zur Herstellung der Glasnudeln wird ein Stärketeig umfassend die beiden Stärkekomponenten auf 90°C erhitzt und somit verkleistert, woran sich eine Extrusion anschließt. Der extrudierte Teig wird daraufhin mit Wasser abgeschreckt. Mit diesem Verfahren wird die Stärkemischung verflüssigt und deren Viskosität abgesenkt. Das Abschrecken der Nudeln soll auch zu einer Stabilisierung der Stärkemischung führen.

Es ist somit eine Aufgabe der vorliegenden Erfindung, eine gelatinisierte Süßigkeit bereitzustellen, die die Nachteile des Stands des Technik überwindet, insbesondere eine verkürzte Gelierzeit und eine insgesamt verbesserte Verarbeitbarkeit ermöglicht. Ebenfalls soll ein Herstellungsverfahren für diese Süßigkeit bereitgestellt werden.

Diese Aufgabe wird erfindungsgemäß gelöst durch eine gelatinisierte Süßigkeit nach Anspruch 1.

Bevorzugt ist die Hülsenfrucht-Stärke eine Erbsenstärke und/oder die modifizierte Stärke anderen Ursprungs eine verflüssigte, stabilisierte und/oder vernetzte Stärke.

Auch wird vorgeschlagen, dass die Stärke anderen Ursprungs Kartoffelstärke und/oder Tapiokastärke umfasst.

Ebenfalls kann vorgesehen sein, dass zumindest eine der Stärken getrocknet und/oder vorverkleistert ist.

Zumindest eine der Stärken kann über Sprühtrocknung hergestellt werden.

Ferner ist bevorzugt, dass zumindest eine der Stärken dextriniert ist.

Auch ist besonders bevorzugt, dass die Süßigkeit 0,5 bis 60 Gew.-%, bevorzugter 0,5 bis 25 Gewichtsprozent an Stärke enthält.

In einer Ausführungsform ist das Süßungsmittel ein Zucker, der ausgewählt ist aus der Gruppe bestehend aus Mono-, Di- oder Trisacchariden, Oligo- und Polysacchariden, einzeln oder als Mischung.

Dabei ist bevorzugt, dass das Süßungsmittel ausgewählt ist aus der Gruppe bestehend Maltit, Sorbit, Mannit, Iditol, Erythrit, Xylit, Sorbit-, Maltit-Sirupen, hydrierten Glukose-Sirupen, starken Süßungsmitteln, einzeln oder als Mischung.

Die Süßigkeit kann ein Gummi- oder Geleeartikel, Lakritz, Dragee oder Kaubonbon sein.

Erfindungsgemäß ist ein Verfahren zur Herstellung einer gelatinisierten Süßigkeit nach Anspruch 19.

Überraschend wurde gefunden, dass eine erfindungsgemäße Hülsenfrucht-Stärke bzw. eine entsprechende Mischung vorteilhaft bei der Herstellung von Süßigkeiten eingesetzt werden kann, da die Verwendung derselben zu einer schnelleren Gelierung und einer besseren Verarbeitbarkeit insgesamt führt. Besonders bevorzugt wird die Hülsenfrucht-Stärke bzw. die Mischung zur Herstellung von Gummi- und Geleeartikeln, Lakritz und Dragees oder Kaubonbons eingesetzt. Das Mischungsverhältnis liegt bei 99:1 bis 1:99 für die Mischung aus verflüssigter Hülsenfrucht-Stärke und modifizierter Stärke anderen Ursprungs.

Wird für die eine verflüssigte Hülsenfrucht-Stärke beispielsweise Erbsenstärke eingesetzt, soll die Stärke anderen Ursprungs dann auch eine andere Hülsenfrucht-Stärke als Erbsenstärke umfassen können.

Eine vorteilhafte Rezeptur zur Herstellung einer Süßigkeit, wobei alle Prozentangaben in dieser Anmeldung Gewichtsprozentangaben sind, ist wie folgt:
5-30% verflüssigte Erbsenstärke
5-30% verflüssigte und/oder stabilisierte Stärke anderen Ursprungs
10-40% Glukosesirup (42 DE)
10-40% Zucker
10-20% Wasser.

Im Rahmen der vorliegenden Erfindung ist eine verflüssigte Hülsenfrucht-Stärke eine verflüssigte, jedoch nicht stabilisierte Stärke.

Eine konkretere Rezeptur zur Herstellung einer erfindungsgemäßen Süßigkeit ist wie folgt:

| | |
|---|---|
| Verflüssigte Erbsenstärke | 20% |
| Zucker | 30% |
| Glukosesirup (42 DE) | 30% |
| Wasser | 20% |
| Zitronensäure (50%) | 12 ml/kg |
| Aroma | nach Bedarf |

Die erfindungsgemäße Süßigkeit wird hergestellt, indem die einzusetzenden Komponenten zunächst bei einer Temperatur von etwa 60°C miteinander vermischt werden. Die daraus erhaltene Zusammenmischung wird anschließend bei einer Temperatur von etwa 135°C bei einem Druck von 2,5 bar gekocht. Daraufhin kann sie in vorbereitete Formen bei einer Temperatur von etwa 80°C gegossen werden. Hier beträgt die Konzentration der Lösung etwa 70-74° Bx. Nach dem Abfüllen kann die Zusammenmischung bei 20-70°C für eine Dauer von etwa 20-30 Stunden trocknen. Nach dem Trocknen können die Süßigkeiten aus der Form entnommen und abgepackt werden.

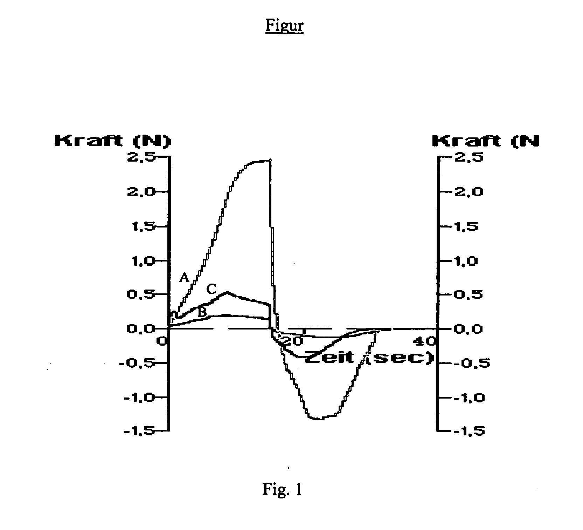

Figur 1 zeigt Texturmessungen unterschiedlicher verflüssigter Stärken mit einem Texture Analyzer, wobei die mit "A" bezeichnete Kurve die Texturmessung für eine erfindungsgemäße eingesetzte Stärke zeigt, Kurve "B" die Messung für eine verflüssigte Weizenstärke und Kurve "C" die Messung für eine modifizierte Kartoffelstärke.

Die Testbedingungen waren wie folgt: Vorgeschwindigkeit: 1,5 mm/sek; Testgeschwindigkeit: 1,0 mm/sek; Rückgeschwindigkeit: 1,0 mm/sek; Kraft: 100,0 g; Weg: 10,0 mm; Verformung/Strain: 10,0%; Auslösewert: Auto (Kraft); Auslösekraft: 5,0 g; Werkzeug: P/2N-Nadel; Messungen pro Sekunde: 200.

Zur Messung wurden die Stärkeprodukte in einer 15-%igen Konzentration in Wasser vermischt und aufgekocht bis 95°C, bei 95°C für 10 Minuten gehalten und anschließend auf 25°C abgekühlt. Die Lösung wurde dann bei Raumtemperatur (etwa 22°C) für zwei Stunden stehengelassen und die Textur dann mit einem Texture Analyzer gemessen. Die Stärkelösung gelierte während der Standzeit bei Raumtemperatur.

Figur 1 zeigt die Ergebnisse der Texturmessung. Für die erfindungsgemäße Süßigkeit wird eine schnellere Gelierung festgestellt, da hier der größte Kraftaufwand für die Texturmessung erforderlich ist.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Gelatinisierte Süßigkeit, enthaltend eine verflüssigte, jedoch nicht stabilisierte Hülsenfrucht-Stärke oder eine Mischung aus einer verflüssigten, jedoch nicht stabilisierten Hülsenfrucht-Stärke und zumindest einer modifizierten Stärke anderen Ursprungs, wobei in der Mischung die verflüssigte, jedoch nicht stabilisierte Hülsenfrucht-Stärke und die modifizierte Stärke anderen Ursprungs in einem Mischungsverhältnis von 99:1 bis 1:99 Gewichtsprozent (auf Basis der gesamten Mischung) vorliegen.

2. Süßigkeit nach Anspruch 1, wobei die Hülsenfrucht-Stärke eine Erbsenstärke ist und/oder die modifizierte Stärke anderen Ursprungs eine verflüssigte, stabilisierte und/oder vernetzte Stärke ist.

3. Süßigkeit nach Anspruch 1 oder 2, wobei die Stärke anderen Ursprungs Kartoffelstärke und/oder Tapiokastärke umfasst.

4. Süßigkeit nach einem der vorangehenden Ansprüche, wobei zumindest eine der Stärken getrocknet und/oder vorverkleistert ist.

5. Süßigkeit nach einem der vorangehenden Ansprüche, wobei zumindest eine der Stärken dextriniert ist.

6. Süßigkeit nach einem der vorangehenden Ansprüche, wobei sie 0,5 bis 60 Gew.-%, bevorzugt 0,5 bis 25 Gewichtsprozent an Stärke enthält.

7. Süßigkeit nach einem der vorangehenden Ansprüche, wobei das Süßungsmittel ein Zucker ist, der ausgewählt ist aus der Gruppe bestehend aus Mono-, Di- oder Trisacchariden, Oligo- und Polysacchariden, einzeln oder als Mischung.

8. Süßigkeit nach einem der vorangehenden Ansprüche, wobei das Süßungsmittel ausgewählt ist aus der Gruppe bestehend aus Maltit, Sorbit, Mannit, Iditol, Erythrit, Xylit, Sorbit-, Maltit-Sirupen, hydrierten Glukose-Sirupen, einzeln oder als Mischung.

9. Süßigkeit nach einem der vorangehenden Ansprüche, wobei die Süßigkeit ein Gummi- oder Geleeartikel, Lakritz, Dragee oder Kaubonbon ist.

10. Verfahren zur Herstellung einer gelatinisierten Süßigkeit, wobei es die Schritte umfasst:
- Herstellen einer Zusammenmischung enthaltend verflüssigte, jedoch nicht stabilisierte Hülsenfrucht-Stärke oder eine Mischung aus einer verflüssigten, jedoch nicht stabilisierten Hülsenfrucht-Stärke und zumindest einer modifizierten Stärke anderen Ursprungs, wobei in der Mischung die verflüssigte, jedoch nicht stabilisierte Hülsenfrucht-Stärke und die modifizierte Stärke anderen Ursprungs in einem Mischungsverhältnis von 99:1 bis 1:99 Gewichtsprozent (auf Basis der gesamten Mischung) vorliegen, mindestens ein Süßungsmittel und Wasser,
- Kochen der Zusammenmischung bei einer Temperatur zwischen 100 und 150°C, bis ein im wesentlichen eingetrocknetes Material erhalten wird,
- Formen der gekochten Zusammenmischung und gegebenenfalls Aufteilen der Zusammenmischung, und
- Rückgewinnen der so erhaltenen gelatinisierten Süßigkeit.

## Claims

1. Gelatinised confectionery containing a liquefied but non-stabilised leguminous starch or a mixture of a liquefied but non-stabilised leguminous starch and at least one modified starch of another origin, wherein the mixture contains the liquefied but non-stabilised leguminous starch and the modified starch of another origin in a mix ratio of 99:1 to 1:99 percent by weight (on the basis of the entire mixture).

2. Confectionery according to claim 1, wherein the leguminous starch is pea starch and / or the modified starch of another origin is a liquefied, stabilised and / or cross-linked starch.

3. Confectionery in accordance with claim 1 or 2, wherein the starch of another origin includes potato starch and / or tapioca starch.

4. Confectionery in accordance with one of the foregoing claims, wherein at least one of the starches is dried and / or pre-gelatinised.

5. Confectionery in accordance with one of the foregoing claims, wherein one of the starches is dextrinised.

6. Confectionery in accordance with one of the foregoing claims, wherein it contains 0.5 to 60 % by weight, preferably 0.5 to 25 percent by weight, of starch.

7. Confectionery in accordance with one of the foregoing claims, wherein the sweetening agent is a sugar selected from the group consisting of monosaccharides, disaccharides or trisaccharides, oligosaccharides and polysaccharides, individually or as a mixture.

8. Confectionery in accordance with one of the foregoing claims, wherein the sweetening agent is a sugar selected from the group consisting of maltitol, sorbitol, mannitol, iditol, erythritol, xylitol, sorbitol or maltitol syrups, and hydrogenated glucose syrups, individually or as a mixture.

9. Confectionery in accordance with one of the foregoing claims, wherein the confectionery is a gum or jelly item, liquorice, sugar-coated sweet or chewing gum.

10. Process for the manufacture of a gelatinised confectionery, wherein the steps include:
- the manufacture of a mixture containing liquefied but non-stabilised leguminous starch or a mixture of a liquefied but non-stabilised leguminous starch and at least one modified starch of another origin, wherein the mixture contains the liquefied but non-stabilised leguminous starch and the modified starch of another origin in a mix ratio of 99:1 to 1:99 percent by weight (on the basis of the entire mixture).
- boiling of the mixture at a temperature between 100 and 150°C, until a basically dry material is obtained.
- formation of the boiled mixture and possibly division of the mixture, and
- recovery of the gelatinised confectionery thus obtained.

## Revendications

1. Confiserie gélatinée contenant un amidon de légumineuse liquéfié, pourtant non stabilisé, ou un mélange constitué d'un amidon de légumineuse liquéfié, pourtant non stabilisé et au moins un amidon modifié d'une origine différente, où l'amidon de légumineuse liquéfié, pourtant non stabilisé et l'amidon modifié d'origine différente se présentent dans un rapport de mélange de 99 : 1 à 1 : 99 en pourcentage en poids (sur la base du mélange total).

2. Confiserie selon la revendication 1 où l'amidon de légumineuse est un amidon de pois et/ou l'amidon modifié d'origine différente est un amidon liquéfié, stabilisé et/ou réticulé.

3. Confiserie selon les revendications 1 ou 2 où l'amidon d'origine différente comprend de l'amidon de pomme de terre et/ou de l'amidon de tapioca.

4. Confiserie selon l'une des revendications précédentes où au moins l'un des amidons est séché et/ou est prégélifié.

5. Confiserie selon l'une des revendications précédentes où au moins l'un des amidons est dextrinisé.

6. Confiserie selon l'une des revendications précédentes celle-ci contenant de 0,5 à 60 % en poids, de préférence de 0,5 à 25 pour cents en poids d'amidon.

7. Confiserie selon l'une des revendications précédentes où le produit édulcorant est un sucre qui est choisi dans le groupe constitué par des mono-, di- ou tri-saccharides, des oligo- et des polysaccharides, employé seul ou en mélange.

8. Confiserie selon l'une des revendications précédentes où le produit édulcorant est choisi dans le groupe constitué par le maltitol, le sorbitol, le mannitol, l'iditol, l'érytritol, le xylitol, le sorbitol, les sirops de maltitol, les sirops de glucose hydratés, employé seul ou en mélange.

9. Confiserie selon l'une des revendications précédentes où la confiserie est un article en gomme ou en gelée, une réglisse, une dragée ou un bonbon à mâcher.

10. Procédé de fabrication d'une confiserie gélatinisée, procédé comprenant les étapes :
- de fabrication d'un mélange de composition contenant de l'amidon de légumineuse liquéfié, pourtant non stabilisé ou d'un mélange d'un amidon de légumineuse liquéfié, pourtant non stabilisé et d'au moins un amidon modifié d'origine différente, où dans le mélange, l'amidon de légumineuse liquéfié, pourtant non stabilisé et l'amidon modifié d'origine différente se présentent dans un rapport de mélange de 99 : 1 à 1 : 99 en pourcentage en poids (sur la base du mélange total), le mélange présente au moins un produit édulcorant et de l'eau,
- de cuisson du mélange de composition à une température entre 100 et 150 °C, jusqu'à ce qu'un produit globalement séché par la cuisson soit obtenu,
- de moulage du mélange de composition ayant subi la cuisson et la division éventuelle du mélange de composition, et
- de récupération de la confiserie gélatinisée ainsi obtenue.
